# EUROPÄISCHE PATENTSCHRIFT

(11) **EP 2 144 435 B1**
(45) Veröffentlichungstag und Bekanntmachung des Hinweises auf die Patenterteilung: **26.10.2016**
(21) Anmeldenummer: 09100291.5
(22) Anmeldetag: 26.05.2009
(51) Int. Cl.: H04N 5/225, B60R 1/00

(54) **Kamera und Kameragehäuse**
Camera and camera housing
Caméra et boîtier de caméra

(30) Priorität: 07.07.2008 DE 102008040220
(43) Veröffentlichungstag der Anmeldung: 13.01.2010
(73) Patentinhaber: Robert Bosch GmbH, 70442 Stuttgart (DE)
(72) Erfinder: Kallinich, Rainer, 31139, Hildesheim (DE); Schauer, Norbert-Heinz, 31174, Schellerten (DE)

(56) Entgegenhaltungen:
- EP-A2- 1 096 452
- DE-A1-102005 028 144
- DE-C1- 19 839 461
- JP-A- 2005 022 496
- US-A- 4 974 802
- US-A- 5 905 923
- US-A1- 2004 023 684
- US-A1- 2006 209 437
- US-A1- 2008 079 847

## Beschreibung

### Stand der Technik

Die Erfindung geht von einer Kamera und einem Kameragehäuse nach der Gattung des unabhängigen Patentanspruchs aus.

Aus US 20080079847 A1 ist eine Kamera bekannt, die über ein Gehäuse und ein in dem Gehäuse motorisch drehbar gelagertes optisches Aufnahmemodul verfügt, welches Aufnahmemodul wiederum das eigentliche Kameramodul, also das bildgebende Element, umfasst. Zur Lagerung des kugelförmig ausgebildeten Aufnahmemoduls verfügt das Gehäuse über ein teilkugelförmiges Lager. An der der Öffnung zur Aufnahme des optischen Aufnahmemoduls gegenüber liegenden Seite weist das Lager eine weitere Öffnung auf, durch die ein mit dem optischen Aufnahmemodul verbundenes Antriebselement hindurch ragt.

Die EP 1 096 452 beschreibt ein Kameragehäuse mit einem Basiselement, einer Halterung und einer Abdeckung. Das Kameragehäuse ist mehrteilig realisiert, weil es aus dem Basiselement, der Halterung und der Abdeckung besteht.

Zudem zeigt die US 2004/0023684 A1 ein Mobiltelefon mit einer drehbaren Kamera. Weiterhin sind aus dem Stand der Technik die US 2006/0209437 A1 und die DE 10 2005 028 144 A1 bekannt.

### Vorteile der Erfindung

Die Erfindung mit den Merkmalen des unabhängigen Patentanspruchs stellt in vorteilhafter Weise eine neuartige Halterung für eine Kamera vor.

Die Erfindung hat den besonderen Vorteil, dass ein Aufnahmemodul, welches das Kameramodul und damit das eigentliche bildgebende Element der Kamera umfasst, gegenüber einem unbeabsichtigten Verdrehen durch beispielsweise Erschütterungen oder andere, insbesondere äußere, Einflüsse gesichert gehalten wird. Gleichzeitig bleibt jedoch ein Verschwenken des Aufnahmemoduls zur Einstellung des Blickwinkels der Kamera möglich. Dies wird dadurch erreicht, dass das Aufnahmemodul reib- und/oder kraftschlüssig im Kameragehäuse gehalten wird. Der Reib- oder Kraftschluss wirkt einer unbeabsichtigten Verdrehung des Aufnahmemoduls entgegen.

Ein Reibschluss kann vorzugsweise durch vorteilhafte Wahl von Materialparametern für insbesondere das Aufnahmemodul und ein das Aufnahmemodul aufnehmendes Lager des Gehäuses erreicht werden. Beispielsweise eignet sich hier eine Paarung mit zumindest einem Partner mit gummierter Oberfläche oder aus Gummi oder einem hinsichtlich seines Reibkoeffizienten ähnlichen Material. Der Reibschluss kann darüber hinaus vorteilhaft auch durch eine entsprechende Anpassung der Oberflächen der beiden Reibpartner beeinflusst werden, insbesondere durch Aufrauhung der Oberflächen.

Ein Kraftschluss kann vorzugsweise durch vorteilhafte Wahl der Abmessungen des das Aufnahmemodul aufnehmenden Lagers relativ zu den Abmessungen des Aufnahmemoduls erreicht werden, nämlich insbesondere dadurch, dass das Lager mit gegenüber den äußeren Abmessungen des Aufnahmemoduls Untermaß ausgeführt wird. Nach Einsetzen des Aufnahmemoduls in das Lager des Gehäuses übt somit das Lager eine Klemmkraft auf das Aufnahmemodul aus, welche einem Verschwenken des Aufnahmemoduls im Lager entgegenwirkt.

Vorzugsweise ist das Lager oder Teile des Lagers aus einem elastischen Material, wie insbesondere einem elastomeren Kunststoff oder Gummi oder dergleichen ausgeführt. Eine Gummilagerung verbindet in vorteilhafter Weise die Möglichkeit sowohl einer reib- als auch einer kraftschlüssigen Verbindung von Lager und Aufnahmemodul. Weiterhin ist leicht eine Abdichtung des Aufnahmemoduls gegen das Gehäuse zu erreichen. Auch eine zusätzliche Abdichtung zwischen Aufnahmemodul und Lager sowie zwischen Lager und Kamera ist möglich. Vorzugsweise kann auch das gesamte Gehäuse aus dem elastischen Material gefertigt werden. Bei Anbringung des Gehäuses an einer Wand, beispielsweise einem Karosserieblech eines Kraftfahrzeuges lässt sich damit eine Abdichtung erreichen. Dies ist insbesondere im Zusammenhang mit einer Kabelverlegung von dem Aufnahmemodul zu einer Weiterverarbeitung der Kamerasignale von Bedeutung, da die Kabel üblicherweise durch die Wand, also beispielsweise ein Karosserieblech, hindurch verlegt werden müssen. Hier bewirkt das Gehäuse vorteilhaft eine Abdichtung der dafür erforderlichen Bohrung in der Wand. Weiterhin ist die Kamera dabei vorteilhaft schwingungsgedämpft.

Zur Befestigung des Kameragehäuses und damit der gesamten Kamera weist dieses vorteilhaft Befestigungsmittel auf. Diese können insbesondere aus einem Gehäusefortsatz bestehen. Dieser Gehäusefortsatz, der vorzugsweise einen runden Querschnitt aufweist, kann durch ein entsprechendes Bohrloch der Wand, beispielsweise Karosserieblech hindurch geführt werden. Damit kann das Gehäuse mit einem einzigen Bohrloch an der Wand befestigt werden. Vorzugsweise ist der Fortsatz hohl ausgebildet, so dass ein Kabel von dem Kameramodul zu einer jenseits der Wand, also beispielsweise im Fahrzeuginnenraum angeordneten, Weiterverarbeitung durch den Fortsatz verlegt werden kann. Der Fortsatz bewirkt dabei vorteilhaft einen Schutz des Kabels und darüber hinaus eine verbesserte Abdichtung des Bohrlochs. Vorzugsweise ist dieser Fortsatz pilzförmig ausgebildet, so dass der Kragen des Pilzes, also die Unterseite des Pilzkopfes, die Wand hinterfasst und somit für eine sichere Fixierung des Gehäuses an der Wand sorgt.

Weiterhin ist es von Vorteil, ein zusätzliches Sicherungsmittel zur Sicherung der Befestigung des Kameragehäuses an der Wand, vorzusehen. Damit wird die Kamera vorteilhaft gegen unautorisierte Demontage und Diebstahl geschützt. Dieses Sicherungsmittel kann vorteilhaft in Form eines Hohl- oder Rohrniets ausgebildet sein, der in eine Längsbohrung des Fortsatzes eingesetzt wird und einen Kragen aufweist, der auf Seiten des Kameragehäuses, also insbesondere der Außenseite der Fahrzeugkarosserie, einen Abschnitt des Gehäuses hinterfasst. Auf der Rückseite der Wand, also beispielsweise im Fahrzeuginnenraum, kann an den Niet durch Verstemmen ein weiterer Kragen angeformt werden, der die Wand bzw. das Karosserieblech auf der Fahrzeuginnenseite hintergreift. Somit ist das Kameragehäuses an der Wand bzw. der Fahrzeugkarosserie fest vernietet und damit gegen Diebstahl gesichert. Weitere Ausführungsformen und Vorteile der Erfindung ergeben sich in augenfälliger Weise aus der Beschreibung der Ausführungsbeispiele.

### Zeichnungen

Ausführungsbeispiele der Erfindung sind in den Figuren dargestellt und werden nachfolgend näher erläutert. Gleiche Bezugszeichen bezeichnen dabei gleiche oder gleichwirkende Elemente.

### Es zeigen

Figur 1 eine Explosionsdarstellung der erfindungsgemäßen Kamera
Figur 2 einen Querschnitt durch die erfindungsgemäße Kamera und
Figur 3 eine Seitenansicht der erfindungsgemäßen Kamera, die hier an einer Wand, im vorliegenden Fall beispielsweise an einem Karosserieblech außen an einem Kraftfahrzeug, montiert ist und hier beispielsweise im Heckbereich am Fahrzeug zur Hinderniserkennung bei Rückwärtsfahrten angeordnet ist.

### Beschreibung der Ausführungsbeispiele

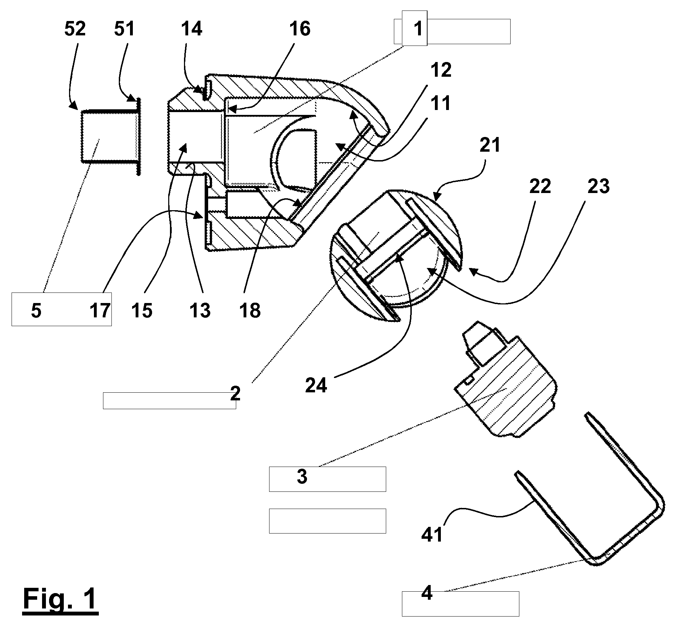

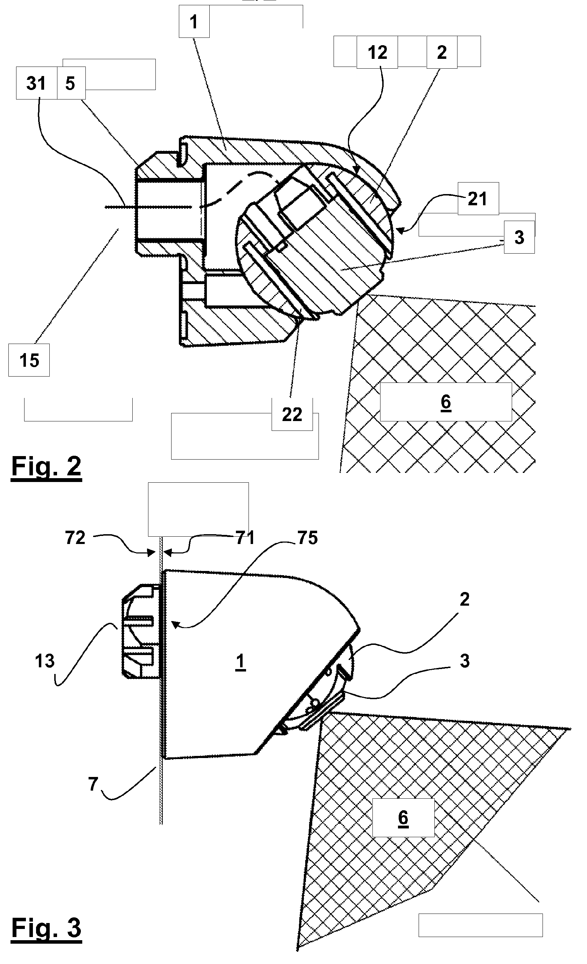

Die erfindungsgemäße Kamera umfasst gemäß Figur 1 ein Kameragehäuse 1. Dieses Kameragehäuse 1 ist vorzugsweise aus einem elastischen Material, beispielsweise Gummi oder einem Elastomer oder dergleichen gefertigt. Das Gehäuse 1 weist eine Höhlung 11 auf. Diese Höhlung 11 dient der Aufnahme eines Aufnahmemoduls 2 (s. Figuren 2 und 3). Wandabschnitte 12 der Höhlung bilden dabei Anlageflächen und/oder -punkte für das Aufnahmemodul 2 und bilden somit ein Lager für das Aufnahmemodul 2. Desweiteren ist vorzugsweise eine Dichtlippe 18 vorgesehen, die eine Dichtigkeit zum Aufnahmemodul herstellt.

Das Aufnahmemodul 2 weist eine Aufnahmebohrung 23 mit einer Dichtlippe 24 zur Aufnahme eines eigentlichen Kameramoduls 3 auf. Das Kameramodul 3 umfasst die bildgebenden Elemente einer elektronischen, beispielsweise an sich bekannten CCD-Kamera sowie Linsenelemente. Das Kameramodul 3 wird in die Aufnahmebohrung 23 des Aufnahmemoduls 2 eingesetzt. Das Aufnahmemodul 2 weist weitestgehend Kugelform oder Kugelabschnittsform auf.

Zur Halterung des Aufnahmemoduls 2 im Gehäuse 1 ist der Innendurchmesser von dessen beispielsweise sphärischer Höhlung 11 etwas geringer als der Außendurchmesser des Aufnahmemoduls 2. Wird nun das Aufnahmemodul 2 in die Höhlung 11 des Gehäuses 1 hineingepresst, übt die Höhlung bzw. das durch die Höhlung 11 gebildete Lager eine Druckkraft in im wesentlichen radialer Richtung auf das Aufnahmemodul 2 aus, so dass dieses kraftschlüssig im Lager gehalten wird. Durch die vorzugsweise Fertigung des Gehäuses 1 aus Gummi oder dergleichen, welches Material einen hohen Reibbeiwert aufweist, wird das Aufnahmemodul 2 weiterhin auch reibschlüssig in dem Lager des Gehäuses 1 fixiert.

Schließlich ist der Aufnahmeraum 11 bzw. die Höhlung 11 des Gehäuses 1 auch so ausgestaltet, dass etwas mehr als eine Halbkugel des Aufnahmeelements 2 darin aufgenommen wird. Die Höhlung des Gehäuses 1 verjüngt sich somit ausgehend vom größten Durchmesser in Richtung des Aufnahmeelements 2 bzw. in Blickrichtung 6 des Kameramoduls, so dass die durch die Höhlung 11 bzw. die die Höhlung 11 begrenzenden Wandabschnitte 12 des Gehäuses gebildete Lagerpfanne das Aufnahmemodul 2 auch formschlüssig hält.

An seinem der Öffnung 11 abgewandten Ende weist das Gehäuse 1 vorzugsweise einen Fortsatz 13 auf, der der Befestigung des Gehäuses 1 und damit der gesamten Kamera beispielsweise an einer Wand 7 dient. Die Wand 7 kann beispielsweise ein Karosserieblech eines Kraftfahrzeugs sein. Die Kamera kann dort beispielsweise im Heckbereich des Fahrzeugs an dessen Außenseite montiert sein oder werden, um beispielsweise bei Rückwärtsfahrt dem Fahrzeugführer Hindernisse anzuzeigen.

Der Fortsatz 13 ist vorzugsweise aus demselben Material wie das Gehäuse 1 und einstückig mit diesem gefertigt. Der Fortsatz 13 weist hier einen pilzförmigen Querschnitt auf. Die Ränder 14 des Pilzhuts sind dazu vorgesehen, zur Montage durch eine Bohrung 75 der Wand 7 hindurchgeführt zu werden und sodann hinter der Wand 7 zu verrasten bzw. die Ränder der Bohrung zu hinterfassen. Auf der Vorderseite 71 der Wand liegt dann eine Anlagefläche 17 des Kameragehäuses an. Neben der eigentlichen Montagefunktion erfüllen Anlagefläche 17 und Fortsatz auch die Wirkung einer Dichtung für die Bohrung in der Wand 7. Auch hier ist es von Vorteil, wenn das gesamte Gehäuse 7 aus Gummi oder einem anderen elastischen Material gefertigt ist.

Der Fortsatz 13 ist vorzugsweise hohl ausgebildet, so dass durch seine Längsbohrung 15 Kabel 31 zur Verbindung des Kameramoduls 3 mit jenseits der Wand, beispielsweise im Fahrzeuginnenraum, angeordneten Auswertegeräten, insbesondere einem Monitor, verlegt werden können.

Weiter ist zur Sicherung des Gehäuses 1 an der Wand 7 ein Sicherungselement 5 vorgesehen. Dieses ist beispielsweise als Hohl- oder Rohrniet 5 ausgeführt und wird zur Montage der Kamera durch die Öffnung 11 des Gehäuses in die Bohrung 15 des Fortsatzes 13 eingeführt. Ein Kragen 51 des Rohrniets kommt dabei an einem die Längsbohrung 15 des Fortsatzes 13 umgebenden Wandabschnitts 16 des Gehäuses zum Anliegen. Der Durchmesser der Wandbohrung 75 wird bei der Montage der Kamera vorzugsweise so dimensioniert, dass der Durchmesser des Kragens 51 größer als der Durchmesser der Wandbohrung ist. Nachdem Fortsatz 13 und damit auch das dem Kragen abgewandte Ende 52 des Rohrniets 5 durch die Wandbohrung 75 hindurch geführt sind, kann dieses abgewandte Ende 52 durch plastische Verformung en zu einem zweiten Kragen 52 deformiert werden, der nun die Rückseite 72 der Wand 7 hintergreift und damit das Gehäuse 1 und somit die Kamera an der Wand 7 fixiert.

Zur Einstellung eines Blickwinkels 6 oder Erfassungsbereichs der Kamera ist vorgesehen, dass das Aufnahmemodul 2 gegenüber dem Gehäuse 1 verschwenkt wird. Hierzu sind die durch Reib- und/oder Kraftschluss des Lagers 12 auf das Halteelement 2 einwirkenden Haltekräfte zu überwinden.

Zu diesem Zweck weist das Aufnahmemodul einen Ansatz für ein Verstellwerkzeug 4 auf. Dieser Ansatz ist im vorliegenden Fall in Form zweier Sackbohrungen 22 ausgeführt, die im Wesentlichen entlang der Längsachse des Kameramoduls 3 bzw. der Aufnahmebohrung 23 des Aufnahmemoduls 2 verlaufen. Die Ausbildung als Sackbohrung hat dabei den Vorteil, dass das Innere des Gehäuses 1, also die Höhlung 11 gegenüber Umwelteinflüssen, insbesondere dem Eindringen von Schmutz oder Feuchtigkeit geschützt bleibt. Zur Verstellung des Blickwinkels 6 der Kamera werden Schenkel 41 des Werkzeugs 4 in die Sackbohrungen 22 eingeführt und das Aufnahmemodul 2 sodann durch Betätigung des Werkzeugs 4 verschwenkt.

## Patentansprüche

1. Kamera mit einem einstückigen Gehäuse (1) und einem ein Kameramodul (3) umfassenden Aufnahmemodul (2), welches Aufnahmemodul (2) in einem Lager (12) des Gehäuses (1) gehalten wird, wobei das Gehäuse (1) eine Höhlung (11) aufweist, die der Aufnahme des Aufnahmemoduls (2) dient, und Wandabschnitte der Höhlung (11) das Lager (12) für das Aufnahmemodul (2) bilden, wobei der Blickwinkel (6) der Kamera durch Verschwenken des Aufnahmemoduls (2) im Lager (12) einstellbar ist, wobei das Aufnahmemodul (2) reib- und/oder kraftschlüssig mit dem Lager (12) verbunden ist, derart, dass der Reib- und/oder Kraftschluss einer unbeabsichtigten Verdrehung des Aufnahmemoduls (2) gegenüber dem Gehäuse (1) entgegen wirkt, **dadurch gekennzeichnet, dass** das Gehäuse (1) und das Lager (12) aus Gummi bestehen und das Lager (12) als Teil des Gehäuses (1) gefertigt ist, und dass das Aufnahmemodul (2) kugel- oder teilkugelförmig ausgebildet ist und das Lager (12) zumindest einen sphärischen Abschnitt zur Aufnahme des Aufnahmemoduls (2) aufweist, wobei die Höhlung (11) zur Aufnahme von mehr als einer Halbkugel des Aufnahmemoduls (2) ausgestaltet ist, und wobei sich die Höhlung des Gehäuses (1) ausgehend von ihrem größten Durchmesser in Richtung des Aufnahmemoduls (2) verjüngt, sodass das Aufnahmemodul (2) von den die Höhlung (11) begrenzenden Wandabschnitten (12) formschlüssig gehalten ist.

2. Kamera nach Anspruch 1, **dadurch gekennzeichnet, dass** der Reib- und/oder Kraftschluss dadurch erreicht wird, dass das Lager (12) gegenüber den Abmessungen des Aufnahmemoduls (2) mit Untermaß ausgeführt ist.

3. Kamera nach einem der vorhergehenden Ansprüche, **dadurch gekennzeichnet, dass** das Aufnahmemodul (2) eine Aufnahmebohrung (23) zur Aufnahme des Kameramoduls (3) aufweist.

4. Kamera nach einem der vorhergehenden Ansprüche, **dadurch gekennzeichnet, dass** das Gehäuse (1) Mittel (13) zur Befestigung der Kamera, insbesondere an einer Wand (7), beispielsweise an einem Karosserieblech eines Kraftfahrzeugs, aufweist.

5. Kamera nach Anspruch 4, **dadurch gekennzeichnet, dass** die Befestigungsmittel in Form eines Fortsatzes (13) zur Durchdringung der Wand (7) ausgebildet sind.

6. Kamera nach Anspruch 5, **dadurch gekennzeichnet, dass** der Fortsatz (13) pilzförmig ausgebildet ist, wobei ein Kragen (14) des pilzförmigen Fortsatzes zum Hinterfassen der Wand (7) vorgesehen ist.

7. Kamera nach einem der Ansprüche 5 oder 6, **dadurch gekennzeichnet, dass** der Fortsatz (13) eine Längsbohrung (15) zur Führung eines Kabels (31) vom Aufnahmemodul (3) hinter die Wand (7) aufweist.

8. Kamera nach einem der Ansprüche 4 bis 7, **dadurch gekennzeichnet, dass** das Gehäuse (1) zusätzliche Sicherungsmittel (5) zur Fixierung an der Wand (7) aufweist.

9. Kamera nach Anspruch 8, **dadurch gekennzeichnet, dass** die Sicherungsmittel (5) in Form eines Rohrniets (5) ausgebildet sind, dessen erster, kameraseitiger Kragen (51) einen Wandabschnitt (16) des Gehäuses (1) um den Fortsatz (13) herum hintergreift und an dessen wandseitigem Ende (52) nach Montage des Gehäuses (1) ein Kragen (52) zum Hintergreifen der Wand (7) durch plastisches Verformen anformbar ist.

## Claims

1. Camera with a single-piece housing (1) and a receiving module (2) surrounding a camera module (3), which receiving module (2) is held in a bearing (12) of the housing (1), wherein the housing (1) has a cavity (11) which serves for receiving the receiving module (2), and wall portions of the cavity (11) form the bearing (12) for the receiving module (2), wherein the viewing angle (6) of the camera is adjustable by pivoting of the receiving module (2) in the bearing (12), wherein the receiving module (2) is connected to the bearing (12) with a frictional and/or force fit in such a manner that the frictional and/or force fit counters an unintended rotation of the receiving module (2) in relation to the housing (1), **characterized in that** the housing (1) and the bearing (12) are composed of rubber, and the bearing (12) is manufactured as part of the housing (1), and **in that** the receiving module (2) is of spherical or partially spherical design and the bearing (12) has at least one spherical portion for receiving the receiving module (2), wherein the cavity (11) is configured for receiving more than one hemisphere of the receiving module (2), and wherein the cavity of the housing (1) tapers from its largest diameter in the direction of the receiving module (2) such that the receiving module (2) is held as a form fit by the wall portions (12) delimiting the cavity (11).

2. Camera according to Claim 1, **characterized in that** the friction and/or force fit is achieved by the bearing (12) being formed with an undersize in relation to the dimensions of the receiving module (2).

3. Camera according to either of the preceding claims, **characterized in that** the receiving module (2) has a receiving bore (23) for receiving the camera module (3).

4. Camera according to one of the preceding claims, **characterized in that** the housing (1) has means (13) for fastening the camera, in particular to a wall (7), for example to a body panel of a motor vehicle.

5. Camera according to Claim 4, **characterized in that** the fastening means are designed in the form of an extension (13) for penetrating the wall (7).

6. Camera according to Claim 5, **characterized in that** the extension (13) is of mushroom-design, wherein a collar (14) of the mushroom-shaped extension is provided for gripping behind the wall (7).

7. Camera according to either of Claims 5 and 6, **characterized in that** the extension (13) has a longitudinal bore (15) for guiding a cable (31) from the receiving module (3) to behind the wall (7).

8. Camera according to one of Claims 4 to 7, **characterized in that** the housing (1) has additional securing means (5) for fixing to the wall (7).

9. Camera according to Claim 8, **characterized in that** the securing means (5) are designed in the form of a tubular rivet (5), the first, camera-side collar (51) of which engages around the extension (13) behind a wall portion (16) of the housing (1), and the collar (52) can be integrally formed on the wall-side end (52) of said tubular rivet by plastic deformation after the installation of the housing (1) in order to engage behind the wall (7).

## Revendications

1. Caméra dotée d'un boîtier (1) d'un seul tenant et d'un module de réception (2) comportant un module de caméra (3),
le module de réception (2) étant maintenu dans un palier (12) du boîtier (1),
le boîtier (1) présentant un creux (11) qui sert à recevoir le module de réception (2),
des sections de la paroi du creux (11) formant le support (12) pour le module de réception (2),
l'angle d'observation (6) de la caméra pouvant être ajusté par pivotement du module de réception (2) dans le support (12),
le module de réception (2) étant relié par frottement et/ou en correspondance mécanique au support (12) de telle sorte que le frottement et/ou la correspondance mécanique s'opposent à une rotation intempestive du module de réception (2) par rapport au boîtier (1),
**caractérisée en ce que**
le boîtier (1) et le support (12) sont constitués de caoutchouc et le support (12) est réalisé sous la forme d'une partie du boîtier (1),
**en ce que** le module de réception (2) a une configuration en sphère ou en partie de sphère et le support (12) présente au moins une section sphérique de réception du module de réception (2),
**en ce que** le creux (11) est configuré pour recevoir plus d'une demi-sphère du module de réception (2), le creux du boîtier (1) se rétrécissant en direction du module de réception (2) à partir de son plus grand diamètre de telle sorte que le module de réception (2) soit maintenu en correspondance géométrique par les sections de paroi (12) qui délimitent le creux (11).

2. Caméra selon la revendication 1, **caractérisée en ce que** le frottement et/ou la correspondance mécanique sont obtenus par le fait que le support (12) est réalisé à des dimensions plus petites que les dimensions du module de réception (2).

3. Caméra selon l'une des revendications précédentes, **caractérisée en ce que** le module de réception (2) présente un alésage de réception (23) qui reprend le module de caméra (3).

4. Caméra selon l'une des revendications précédentes, **caractérisée en ce que** le boîtier (1) présente des moyens (13) de fixation de la caméra, en particulier sur une paroi (7) et par exemple sur une tôle de carrosserie d'un véhicule automobile.

5. Caméra selon la revendication 4, **caractérisée en ce que** les moyens de fixation présentent la forme d'un appendice (13) apte à traverser la paroi (7).

6. Caméra selon la revendication 5, **caractérisée en ce que** l'appendice (13) a la forme d'un champignon, un collet (14) de l'appendice en forme de champignon étant prévu pour accrocher la paroi (7) par l'arrière.

7. Caméra selon l'une des revendications 5 ou 6, **caractérisée en ce que** l'appendice (13) présente un alésage longitudinal (15) qui permet de guider un câble (31) entre le module de réception (3) et l'arrière de la paroi (7).

8. Caméra selon l'une des revendications 4 à 7, **caractérisée en ce que** le boîtier (1) présente de plus des moyens de fixation (5) qui permettent de le fixer sur la paroi (7).

9. Caméra selon la revendication 8, **caractérisée en ce que** les moyens de fixation (5) présentent la forme d'un rivet tubulaire (5) dont un premier collet (51) situé côté caméra accroche par l'arrière une section de paroi (16) du boîtier (1) autour de l'appendice (13) et dont l'extrémité (52) située côté paroi peut être déformée en collet (52) accrochant la paroi (7) par l'arrière, par déformation plastique après le montage du boîtier (1).
